# EUROPEAN PATENT APPLICATION

(11) **EP 4 006 215 A1**
(43) Date of publication of application: **01.06.2022**
(21) Application number: 20844044.6
(22) Date of filing: 16.07.2020
(51) Int. Cl.: D01F 2/00

(54) **CELLULOSE FIBER CONTAINING CARBON NANOTUBE, AND METHOD FOR PRODUCING SAME**

(30) Priority: 24.07.2019 JP 2019136487
(71) Applicant: Omikenshi Co., Ltd., Chuo-ku Osaka-shi Osaka 5418541 (JP); TOYOTA TSUSHO MATEX CORPORATION, Osaka-shi, Osaka 542-0081 (JP)
(72) Inventor: ISOJIMA, Yasuyuki, Osaka-shi, Osaka 541-8541 (JP); TAKAHASHI, Naruaki, Osaka-shi, Osaka 542-0081 (JP); UEJIMA, Mitsugu, Tokyo 100-8246 (JP)
(74) Representative: Cabinet Beau de Loménie
(86) International application number: PCT/JP2020/027612
(87) International publication number: WO 2021/015078

(57) **Abstract**

A carbon nanotube-containing cellulose fiber, including: a chemically modified carbon nanotube, and a cellulose fiber, for providing a carbon nanotube-containing cellulose fiber capable of sufficiently decreasing fibrillation and capable of

sufficiently improving strength, wherein the chemically modified carbon nanotube has, on the surface thereof, at least either of a nitrogen-carbon bond and an oxygen-carbon bond.

## Description

### Field of the Invention

The present invention relates to a CNT-containing cellulose fiber containing a carbon nanotube (hereinafter sometimes referred to as "CNT") and a method for producing the CNT-containing cellulose fiber.

### BACKGROUND OF THE INVENTION

High-strength cellulose fibers having excellent heat resistance have been demanded, and have been developed until now.

For example, Patent Literature 1 discloses that a cellulose fiber containing a CNT as a composite fiber is spun by a wet spinning process.

### Prior Art Documents

### Patent Literatures

Patent Literature 1: JP 2015-105441 A

### BRIEF SUMMARY OF THE INVENTION

### Technical Problem

However, the CNT-containing cellulose fiber obtained in Patent Literature 1 had a room for improvement in improving strength while decreasing fibrillation (fluffing).

Furthermore, many viscose process cellulose fibers are used as high-strength fibers having excellent heat resistance. However, even these viscose process cellulose fibers have not been able to sufficiently attain decreasing of fibrillation and improvement of strength.

The present invention was made in view of these points. That is, the problem to be solved by the present invention is to provide a carbon nanotube-containing cellulose fiber that can sufficiently decrease fibrillation and can sufficiently improve strength. Furthermore, the problem to be solved by the present invention is to provide a method for efficiently producing a carbon nanotube-containing cellulose fiber having sufficiently decreased fibrillation and having sufficiently improved strength.

### Solution to Problem

The present inventors did intensive studies aiming at solving the above-mentioned problem. Furthermore, the present inventors found that a carbon nanotube-containing cellulose fiber can sufficiently decrease fibrillation and can sufficiently improve strength by containing a chemically modified carbon nanotube having at least either of a nitrogen-carbon bond (a direct bond between a nitrogen atom and a carbon atom) and an oxygen-carbon bond (a direct bond between an oxygen atom and a carbon atom) on the surface, and a cellulose fiber, and completed the present invention.

Namely, the present invention aims at solving the above-mentioned problem in an advantageous way, and the carbon nanotube-containing cellulose fiber of the present invention is characterized by being a carbon nanotube-containing cellulose fiber including a chemically modified carbon nanotube, and a cellulose fiber, wherein the chemically modified carbon nanotube has, on the surface thereof, at least either of a nitrogen-carbon bond and an oxygen-carbon bond. Thus, by incorporating a chemically modified carbon nanotube having, on the surface thereof, at least either of a nitrogen-carbon bond and an oxygen-carbon bond, and a cellulose fiber, fibrillation can be sufficiently decreased and strength can be sufficiently improved.

Incidentally, in the present invention, "the surface of the chemically modified carbon nanotube" means an area from the outermost surface to a depth up to 5 nm.

Furthermore, in the present invention, the presence of a nitrogen-carbon bond and an oxygen-carbon bond on the surface of the chemically modified carbon nanotube can be confirmed by X-ray photoelectron spectrometry (XPS method).

Furthermore, it is preferable for the carbon nanotube-containing cellulose fiber of the present invention that the chemically modified carbon nanotube contains, on the surface thereof, a nitrogen atom (N) and an oxygen atom (O) at a total content of 2 atom% or more. If the chemically modified carbon nanotube contains a nitrogen atom (N) and an oxygen atom (O) at a total content of 2 atom% or more, fibrillation can further be decreased and strength can further be improved.

Incidentally, in the present invention, "the total content of the nitrogen atom (N) and the oxygen atom (O) on the surface of the chemically modified carbon nanotube" can be measured by X-ray photoelectron spectrometry (XPS method).

Furthermore, it is preferable for the carbon nanotube-containing cellulose fiber of the present invention that the chemically modified carbon nanotube has, on the surface thereof, a functional group including at least one kind selected from the group consisting of a nitrogen atom, a carbon atom, a hydrogen atom and an oxygen atom.

Incidentally, in the present invention, the presence of the functional group on the surface of the chemically modified carbon nanotube can be confirmed by X-ray photoelectron spectrometry (XPS method).

Here, the method for producing a carbon nanotube-containing cellulose fiber of the present invention is a method for producing any of the above-mentioned carbon nanotube-containing cellulose fibers, and is characterized by including: a carbon nanotube dispersion preparation step by preparing a carbon nanotube dispersion obtainable by a dispersion treatment of a mixed liquid containing the chemically modified carbon nanotube, water and a water-soluble xylan; a spinning neat liquid preparation step by preparing a spinning neat liquid by mixing the prepared carbon nanotube dispersion, a cellulose fiber raw material, and at least one of an aprotic polar solvent and an ionic liquid which are capable of dissolving said cellulose fiber raw material; and a spinning step by coagulating the prepared spinning neat liquid by a wet coagulation process, followed by spinning. By undergoing a predetermined carbon nanotube dispersion preparation step, a predetermined spinning neat liquid preparation step, and a predetermined spinning step in this way, a CNT-containing cellulose fiber having sufficiently decreased fibrillation and having sufficiently improved strength can be efficiently produced.

Incidentally, in the present invention, that a certain substance is "water-soluble" means that, when 0.5 g of said substance is dissolved in 100 g of water at 25°C, it gives 0 mass% or more and less than 1. 0 mass% of an insoluble component.

Furthermore, in the present invention, that a certain liquid "can dissolve a cellulose fiber raw material" means that, when 0.5 g of said cellulose fiber raw material is dissolved in 100 g of said liquid, it gives 0 mass% or more and less than 1.0 mass% of an insoluble component.

### Advantageous Effects of Invention

According to the present invention, a CNT-containing cellulose fiber that can sufficiently decrease fibrillation and can sufficiently improve strength can be provided. Furthermore, according to the present invention, a CNT-containing cellulose fiber having sufficiently decreased fibrillation and having sufficiently improved strength can be efficiently produced.

### Best Mode for Carrying Out Invention

Hereinafter, embodiments of the present invention will be described in detail.

Here, the CNT-containing cellulose fiber of the present invention can be used as a fiber for industrial materials such as reinforcing materials for belts, hoses, etc., fiber reinforced plastics, asbestos substitute fiber materials, and cement reinforced fibers without any particular limitation. Furthermore, the method for producing a CNT-containing cellulose fiber for producing the CNT-containing cellulose fiber of the present invention can be used in producing a CNT-containing cellulose fiber having sufficiently decreased fibrillation and having sufficiently improved strength.

### (Carbon nanotube-containing cellulose fiber)

The CNT-containing cellulose fiber of the present invention contains a chemically modified carbon nanotube, and a cellulose fiber, and optionally, further contains components other than the chemically modified carbon nanotube and the cellulose fiber (other components).

### <Chemically modified carbon nanotube>

The chemically modified carbon nanotube has at least either of a nitrogen-carbon bond and an oxygen-carbon bond on the surface thereof.

Furthermore, the nitrogen-carbon bond and the oxygen-carbon bond on the surface of the chemically modified carbon nanotube are derived from a predetermined functional group, and this predetermined functional group can be introduced by, for example, subjecting the carbon nanotube to a predetermined plasma treatment.

Here, it is preferable that the functional group contains at least one kind selected from the group consisting of a nitrogen atom, a carbon atom, a hydrogen atom and an oxygen atom. Specific examples of the functional group may include an amino group, a hydroxyl group, a carboxyl group, an amide group, etc.

Furthermore, it is preferable for the chemically modified carbon nanotube to contain, on the surface, a nitrogen atom (N) and an oxygen atom (O) at a total content of 2 atom% or more, more preferably 5 atom% or more, and preferably 20 atom% or less, more preferably 15 atom% or less. If the total content of the nitrogen atom (N) and the oxygen atom (O) on the surface of the chemically modified carbon nanotube is within the above-mentioned range, the strength of the CNT-containing cellulose fiber can further be improved. Furthermore, if the total content of the nitrogen atom (N) and the oxygen atom (O) on the surface of the chemically modified carbon nanotube is equal to or more than the above-mentioned lower limit, fibrillation can further be decreased.

Incidentally, the presence of a nitrogen-carbon bond and an oxygen-carbon bond on the surface of the chemically modified carbon nanotube, and the presence of functional group on the surface of the chemically modified carbon nanotube can be confirmed by X-ray photoelectron spectrometry (XPS method) as mentioned above.

Furthermore, the total content of the nitrogen atom (N) and the oxygen atom (O) on the surface of the chemically modified carbon nanotube can be confirmed by X-ray photoelectron spectrometry (XPS method) as mentioned above.

Specifically, a chemically modified carbon nanotube to be measured is sprinkled on a carbon tape attached to a sample holder and fixed thereon, and a survey scan measurement (qualification analysis) is carried out on a visual state surface by using, for example, a scanning X-ray electron spectrometer "VG Theta Probe (manufactured by Thermo Fischer Scientific)" under measurement conditions of "irradiation X-ray; single crystalline spectroscopy AlKα, X-ray spot diameter; an oval shape of 800 µm × 400 µm)", and a narrow scan measurement (state analysis) relating to noted elements and detected element is carried out, whereby information on bonding states and functional group components can be obtained.

### [Carbon nanotube (CNT)]

The carbon nanotube (CNT) is not particularly limited, and a single-walled carbon nanotube and/or a multi-walled carbon nanotube can be used, but the CNT is preferably a single-walled carbon nanotube. If a single-walled carbon nanotube is used, the strength of the CNT-containing cellulose fiber can further be improved compared to the case where a multi-walled carbon nanotube is used.

Here, as the CNT, it is preferable to use a CNT having a ratio (3σ/Av) of a diameter distribution (3σ) to an average diameter (Av) of more than 0.20 and less than 0.60, more preferably to use a CNT having 3σ/Av of more than 0.25, further preferably to use a CNT having 3σ/Av of more than 0.50. If a CNT having 3σ/Av of more than 0.20 and less than 0.60 CNT is used, the strength of the CNT-containing cellulose fiber can further be increased even when the amount of CNT incorporated is a small amount, and yarn breakage and fibrillation can be sufficiently suppressed. Incidentally, the average diameter (Av) and diameter distribution (3σ) of the CNT may be adjusted by modifying the method for producing the CNT and the production conditions, or may be adjusted by combining plural kinds of CNTs obtained by different production methods.

In the present invention, as the CNT, a CNT that gives a normal distribution when the diameter measured as described above is plotted on a horizontal axis and the frequency thereof is plotted on a vertical axis, and are approximated by Gaussian is usually used.

Furthermore, the CNT preferably has a peak of Radial Breathing Mode (RBM) when evaluated using a Raman spectroscopy. Incidentally, there is no RBM in Raman spectra of multi-walled carbon nanotubes having three or more layers.

Furthermore, the CNT preferably has a ratio of G band peak intensity to D band peak intensity (G/D ratio) in a Raman spectrum of 1 or more and 20 or less. If the G/D ratio is 1 or more and 20 or less, the strength of the CNT-containing fiber can further be improved even if the amount of CNT incorporated is a small amount.

Furthermore, the average diameter (Av) of the CNT is preferably 0.5 nm or more, more preferably 1 nm or more, and preferably 15 nm or less, more preferably 10 nm or less. If the average diameter (Av) of the CNT is 0.5 nm or more, a CNT-containing cellulose fiber having excellent strength can be obtained by suppressing the aggregation of the CNT and increasing the dispersibility of the CNT in the CNT-containing cellulose fiber. Moreover, if the average diameter (Av) of the CNT is 15 nm or less, a CNT-containing cellulose fiber having excellent strength can be obtained.

Furthermore, the specific surface area of the CNT is preferably 600 m²/g or more, more preferably 800 m²/g or more, and preferably 2,500 m²/g or less, more preferably 1,200 m²/g or less. Furthermore, when the CNT is mainly an opened one, the specific surface area is preferably 1,300 m²/g or more. If the specific surface area of the CNT is 600 m²/g or more, the strength of the CNT-containing fiber can further be improved. Furthermore, if the specific surface area of the CNT is 2,500 m²/g or less, it is possible to obtain a CNT-containing cellulose fiber having excellent strength by suppressing the aggregation of the CNT to increase the dispersibility of the CNT in the CNT-containing cellulose fiber.

In the present invention, the "specific surface area" refers to a BET specific surface area measured using a BET method.

Furthermore, it is preferable that the CNT has a mass density of 0.002 g/cm³ or more and 0.2 g/cm³ or less. If the mass density is 0.2 g/cm³ or less, the bonding between CNTs is weakened, and thus the CNT can be uniformly dispersed to give a CNT-containing cellulose fiber having excellent strength. In addition, if the mass density is 0.002 g/cm³ or more, the integrity of the CNTs can be improved and the variation can be suppressed, and thus handling becomes easy.

Moreover, in the CNT, the length of the structure during synthesis is preferably 100 µm or more and 5, 000 µm or less.

Furthermore, the CNT preferably has a plurality of micropores. Specifically, the CNT preferably has micropores having a pore size smaller than 2 nm, and the abundance thereof is preferably 0.40 mL/g or more, more preferably 0.43 mL/g or more, further preferably 0.45 mL/g or more in terms of micropore volume, and the upper limit is generally about 0.65mL/g. Since the CNT has the micropores as described above, the aggregation of CNT is suppressed and the dispersibility of the CNT in the CNT-containing cellulose fiber is increased, whereby a CNT-containing cellulose fiber having excellent strength can be obtained very efficiently. The micropore volume can be adjusted, for example, by appropriately changing the CNT preparation method and preparation conditions.

Here, the "micropore volume (Vp)" can be calculated from Equation (I): Vp = (V/22414) × (M/p) by measuring a nitrogen adsorption-desorption isotherm at the liquid nitrogen temperature (77 K) of the CNT, wherein V is a nitrogen adsorption amount at a relative pressure P/P0= 0.19. Incidentally, P is a measurement pressure at the time of adsorption equilibrium, P0 is a saturated vapor pressure of liquid nitrogen during the measurement, and in Equation (I), M is a molecular weight of adsorbate (nitrogen), 28.010, and ρ is a density of the adsorbate (nitrogen) at 77 K, 0. 808 g/cm³. The micropore volume can be easily obtained using, for example, "BELSORP (registered trademark)-mini" [manufactured by Nippon Bell Co., Ltd.].

Incidentally, a CNT having the above-mentioned properties can be efficiently produced, for example, in the method for producing a carbon nanotube bulk structure (super-growth method) described in Japanese Patent No. 4,621,896 (European Patent Application Publication No. 1787955) and Japanese Patent No. 4,811,712 (US Patent Application Publication No. 2009/297846) , by forming a catalyst layer on a surface of a substrate by a wet process, and using a raw material gas containing acetylene as a main component (for example, a gas containing 50% by mass or more of acetylene).

The super-growth method is a method in which the activity and life of a catalyst are remarkably increased by bringing a catalyst activator such as water together with a raw material gas into contact with the catalyst in a CVD method.

### [Plasma treatment]

The plasma treatment of the carbon nanotube can be carried out by disposing the carbon nanotube, which is a subject of a surface treatment, in a container containing, for example, argon, neon, helium, nitrogen, carbon dioxide, oxygen, atmosphere (air), etc., and exposing the carbon nanotube to plasma generated by glow discharge. Incidentally, as the discharging form for generating plasma, (1) direct current discharge and low-frequency wave discharge, (2) radio frequency discharge,(3) microwave discharge, etc. can be used.

The conditions for the plasma treatment are not specifically limited, but the treatment intensity is preferably an intensity that gives an energy output per unit surface area of a plasma irradiation surface of 0.05 to 2.0 W/cm², and the gas pressure is preferably 5 to 150 Pa. The treatment time may be appropriately selected, but is generally, 1 to 300 minutes, preferably 10 to 180 minutes, more preferably 15 to 120 minutes.

By carrying out the plasma treatment as mentioned above on the carbon nanotube, a predetermined functional group can be introduced on the surface of the carbon nanotube to prepare a chemically modified CNT.

The chemically-modified CNT may be used as it is, but is not particularly limited, and the chemically-modified CNT can be dispersed in a solvent such as water in the presence of a dispersant such as sodium dodecyl sulfate to put the CNT into a state of a solvent dispersant, or the water content can be removed from the solvent dispersion to put the CNT into a chemically-modified CNT dispersion, and the solvent dispersant or the chemically-modified CNT dispersion can be mixed with the cellulose fiber raw material. Furthermore, the dispersion of the chemically-modified CNT can be carried out using a known method such as ultrasonic irradiation. Incidentally, when obtaining the solvent dispersion, the chemically-modified CNT may be dispersed in a solvent in the presence of a dispersant, and then a water-soluble polymer may further be added as a dispersion stabilizer.

### <Cellulose fiber>

The cellulose fiber is not particularly limited, and cellulose-based regenerated fibers such as rayon, polynosic rayon, cupra, Tencel (trademark) and Lyocell (trademark), and cellulose-based natural fibers such as cotton, flax (linen), ramie, banana, bamboo, kenaf, shell ginger, hemp and kapok, etc. can be used.

Here, from the viewpoint of obtaining a high-strength fiber, it is preferable to use, as the cellulose fiber, a rayon made from high-quality pulp with high physical properties having a relatively high molecular weight (polymerization degree of about 1,000 to 1,400) as a raw material.

On the other hand, from the viewpoint of price, it is preferable to use an inexpensive cellulose fiber having a low molecular weight obtained from bagasse, which is derived from sugarcane, etc. as the cellulose fiber. Here, a low molecular weight means that a polymerization degree is 800 or less, and more preferably a polymerization degree of about 200-600.

In the present invention, the "polymerization degree" means an average polymerization degree, and can be measured using an Ubbelohde viscometer using a copper/ammonia aqueous solution of a fiber according to a known method.

The content of the chemically modified carbon nanotube in the carbon nanotube-containing cellulose is preferably 0.01 parts by mass or more, more preferably 0.02 parts by mass or more, and preferably 1 part by mass or less, more preferably 0.5 parts by mass or less with respect to 100 parts by mass of the cellulose fiber. Here, if the content of the chemically modified carbon nanotube in the carbon nanotube-containing cellulose fiber is within the above-mentioned range, a fiber having decreased fibrillation and having bending resistance while suppressing the aggregation of the chemically modified CNT can be obtained.

### <Other components>

The components other than the chemically modified CNT and the cellulose fiber are not specifically limited. The CNT-containing cellulose fiber of the present invention may contain, as other components, for example, dispersants such as sodium dodecyl sulfate mentioned above, dispersion stabilizers (water-soluble polymers such as polyvinyl alcohols), and the alcohols and water used for the production of the CNT-containing cellulose fiber. Furthermore, the CNT-containing cellulose fiber of the present invention may contain, for example, various polymers other than the above-mentioned cellulose fiber, dispersants and dispersion stabilizers.

### <Physical properties of CNT-containing cellulose fiber>

Specifically, the CNT-containing cellulose fiber of the present invention is, for example, a high-strength fiber having a strength of 4.50 cN/dtex or more (preferably 5.00 cN/dtex or more, more preferably 5.50 cN/dtex or more) . If the strength is the above-mentioned lower limit or more, the CNT-containing cellulose fiber can sufficiently withstand use as an industrial material.

Furthermore, the CNT-containing cellulose fiber of the present invention is, for example, a fiber having a knot strength of 2. 50cN/dtex or more (preferably 3.00 cN/dtex or more, more preferably 3.50 cN/dtex or more). If the knot strength is the above-mentioned lower limit or more, fibrillation (fluffing) can be decreased.

### <Structure of CNT-containing cellulose fiber>

Furthermore, it is preferable that the CNT-containing cellulose fiber of the present invention has a lower degree of orientation of the CNT on the outer periphery part than that on the central part in the cross-sectional surface of the cellulose fiber. This is because the CNT increases the strength of a cellulose fiber by firmly bundling the molecule structures of the cellulose fiber (cellulose crystal structures), and thus in the case where the degree of a CNT oriented in the cellulose fiber axis direction is higher on the outer periphery part than that on the central part, the possibility of peeling of the CNT closer to the surface of the cellulose fiber is relatively increased, and the strength of the cellulose fiber may be deteriorated. On the other hand, if the orientation degree of the CNT is set to be lower on the outer periphery part than that on the central part in the cross-sectional surface of the cellulose fiber, it becomes possible to relatively lower the possibility of peeling of the CNT to give a cellulose fiber having higher strength.

Incidentally, the orientation degree of the CNT in the cross-sectional surface of the cellulose fiber can be controlled by adjusting a winding speed during spinning; for example, the higher the winding speed is, the higher the orientation degree of the CNT on the central part is, and the lower the orientation degree of the CNT on the outer periphery part is.

### (Method for producing carbon nanotube-containing cellulose fiber)

The method for producing a CNT-containing cellulose fiber of the present invention is a method for producing the above-mentioned carbon nanotube-containing cellulose fiber, and is characterized by including: a carbon nanotube dispersion preparation step by preparing a carbon nanotube dispersion obtainable by a dispersion treatment of a mixed liquid containing the chemically modified carbon nanotube, water and a water-soluble xylan; a spinning neat liquid preparation step by preparing a spinning neat liquid by mixing the prepared carbon nanotube dispersion, a cellulose fiber raw material, and at least one of an aprotic polar solvent and an ionic liquid which are capable of dissolving said cellulose fiber raw material; and a spinning step by coagulating the prepared spinning neat liquid by a wet coagulation process, followed by spinning.

### <Carbon nanotube dispersion preparation step>

In the carbon nanotube dispersion preparation step, a carbon nanotube dispersion obtainable by a dispersion treatment of a mixed liquid containing the chemically modified carbon nanotube, water and a water-soluble xylan is prepared.

### [Mixed liquid]

The mixed liquid contains the above-mentioned chemically modified carbon nanotube, water, a water-soluble xylan (glucuronoxylan), and where necessary, further contains a surfactant (dispersant) such as sodium dodecyl sulfate.

The water-soluble xylan (glucuronoxylan) functions as a dispersant that solubilizes or disperses the chemically modified carbon nanotube in an aqueous solvent, and functions finely even in the presence of an aprotic solvent and/or an ionic liquid which are capable of dissolving the cellulose fiber raw material, which are mentioned below, whereby suppress the formation of a CNT aggregate.

The content of the chemically modified carbon nanotube in the mixed liquid is preferably 0.01 parts by mass or more, more preferably 0.05 parts by mass or more, and preferably 1 part by mass or less, more preferably 0.5 parts by mass or less with respect to 100 parts by mass of water. Here, if the content of the chemically modified carbon nanotube in the mixed liquid is within the above-mentioned range, a stable dispersion state without aggregation can be obtained.

The content of the water-soluble xylan (glucuronoxylan) in the mixed liquid is preferably 0.01 parts by mass or more, more preferably 0.05 parts by mass or more, and preferably 1 part by mass or less, more preferably 0.5 parts by mass or less with respect to 100 parts by mass of water. Here, if the content of the water-soluble xylan (glucuronoxylan) in the mixed liquid is within the above-mentioned range, the chemically modified CNT can be stably dispersed.

### [Dispersion treatment]

The dispersion treatment can be carried out by using a known technique such as ultrasonic irradiation, etc.

### [Carbon nanotube dispersion]

The carbon nanotube dispersion is formed by a dispersion treatment of the above-mentioned mixed liquid, and as a dispersion stabilizer, for example, a water-soluble polymer may further be added.

As the water-soluble polymer, for example, a polyvinyl alcohol having a polymerization degree of 200 to 600 is preferable.

### <Spinning neat liquid preparation step>

In the spinning neat liquid preparation step, a spinning neat liquid is prepared by mixing the carbon nanotube dispersion obtained in the above-mentioned carbon nanotube dispersion preparation step, a cellulose fiber raw material, and an aprotic polar solvent and/or an ionic liquid which are capable of dissolving said cellulose fiber raw material.

### [Cellulose fiber raw material]

By using a cellulose fiber as a raw material, a CNT-containing cellulose fiber having excellent strength can be produced at a low cost.

Here, the above-mentioned cellulose fiber may be used directly as the cellulose fiber raw material, but is not specifically limited, and can be prepared by dissolving or dispersing a cellulose fiber in a solvent optionally in the presence of a dispersant. Furthermore, as the solvent, for example, organic solvents such as DMSO (dimethylsulfoxide), N-methyl-2-pyrrolidone and N-methylmorpholine N-oxide, and water can be used. Furthermore, as the dispersant, a known dispersant can be used. Moreover, in the case where a cellulose fiber is used, it is preferable to add an antioxidant such as propyl gallate, etc. By adding an antioxidant, a cellulose fiber having less discoloration and excellent kinetic properties can be obtained.

### [Aprotic polar solvent]

The aprotic polar solvent is a liquid that can dissolve the cellulose fiber raw material, and examples may include DMSO (dimethylsulfoxide), N-methyl-2-pyrrolidone, N-methylmorpholine N-oxide, DMAc (dimethylacetamide), DMF (dimethylformamide), etc.

### [Ionic liquid]

The ionic liquid is a liquid that can dissolve the cellulose fiber raw material, and examples may include 1-butyl-3-methylimidazolium chloride (BMIMCI), 1-butyl-3-methylimidazolium acetate (BMIMAc), 1-butyl-3-methylimidazolium phosphinate (BMIMH₂PO₂), 1-butyl-3-methylimidazoliummethylphosphonate (BMIMMeOHPO₂), 1-ethyl-3-methylimidazolium chloride (EMIMCl), N,N-dimethyl-N-(2-methoxyethyl)-N-methylammonium, 2-methoxyacetate, etc.

Incidentally, the aprotic polar solvent and the ionic liquid may be mixed and used. Furthermore, each of the aprotic polar solvent and the ionic liquid may be used by one kind alone, or two or more kinds may be used in combination.

### [Preparation of spinning neat liquid]

The spinning neat liquid can be obtained by homogeneously mixing the above-mentioned carbon nanotube dispersion, the above-mentioned cellulose fiber raw material, the above-mentioned aprotic polar solvent and/or ionic liquid while carrying out stirring, kneading, etc. Incidentally, various alcohols, polysaccharides, surfactants, etc. may be incorporated in the spinning neat liquid within the scope in which the dispersibility of the chemically modified CNT and the cellulose fiber raw material is not inhibited.

Here, the mixing of the carbon nanotube dispersion, the cellulose fiber raw material, the aprotic polar solvent and/or the ionic liquid can be carried out using a conventionally well-known apparatus such as an ultrasonic wave, a homogenizer, a jet mill and a high shear stirring apparatus, etc. Furthermore, during the mixing, the mixing may be carried out while conducting heating. The chemically modified CNT and the cellulose fiber raw material can be mixed by extruding the chemically modified CNT into the fiber raw material (cellulose solution) filled in a kneader, stirring the solution, kneading, etc.

Incidentally, the mixing of the carbon nanotube dispersion, the cellulose fiber raw material, the aprotic polar solvent and/or the ionic liquid can be carried out by using, for example, either of the following methods (1) to (3).
(1) A method in which a CNT dispersion is added to a cellulose fiber raw material containing an aprotic polar solvent and/or an ionic liquid.
(2) A method in which a cellulose fiber raw material containing an aprotic polar solvent and/or an ionic liquid is mixed with a solvent dispersion of a CNT.
(3) A method in which a solid cellulose fiber raw material is added to a solvent dispersion of a CNT, and an aprotic polar solvent and/or an ionic liquid is further added.

Incidentally, from the viewpoint of enhancing the dispersibility of the chemically modified CNT in the CNT-containing cellulose fiber by homogeneously dispersing the chemically modified CNT in the spinning neat liquid to obtain a CNT-containing cellulose fiber having excellent strength, the method of the above-mentioned (1) or (2) is preferable as the method for preparing the spinning neat liquid.

Furthermore, although the dispersion state of the chemically modified CNT in the spinning neat liquid obtained by mixing the chemically modified CNT and the cellulose fiber raw material as mentioned above is not specifically limited, a dispersion state in which any aggregation bulk is not present by visual observation, which is homogeneous, and which has a lesser decrease width of a G/D ratio of the chemically modified CNT from before the initiation of the dispersion treatment is preferable.

Here, the ratio of the chemically modified CNT and the cellulose fiber raw material which are mixed in the above-mentioned spinning neat liquid preparation step can be determined with considering the performances (strength) required for the CNT-containing cellulose fiber prepared by using the spinning neat liquid and the cost required for the production.

Generally, as the content of the chemically modified CNT in the spinning neat liquid is increased, the strength of the obtained CNT-containing cellulose fiber is improved, whereas the production cost increases. Therefore, in the method for producing a CNT-containing cellulose fiber according to the present invention, it is preferable in the spinning neat liquid preparation step to mix the chemically modified CNT and the cellulose fiber raw material so that the content of the chemically modified CNT per 100 parts by mass of the cellulose fiber raw material becomes a ratio of 0.01 parts by mass or more and 1.0 parts by mass or less, and it is further preferable that the content of the chemically modified CNT is set to be in a ratio of 0.02 parts by mass or more and 0.5 parts by mass or less. If the content of the chemically modified CNT per 100 parts by mass of the cellulose fiber raw material is set to 1.0 parts by mass or less, the production cost can be decreased by suppressing the use amount of the expensive CNT. On the other hand, if the content of the chemically modified CNT per 100 parts by mass of the cellulose fiber raw material is set to 0.01 parts by mass or more, effects by incorporating the chemically modified CNT can be obtained.

Furthermore, in the method for producing a CNT-containing cellulose fiber according to the present invention, in the spinning neat liquid preparation step, it is preferable to mix the water-soluble xylan and the cellulose fiber raw material so that the content of the water-soluble xylan per 100 parts by mass of the cellulose fiber raw material is at a ratio of 0.01 parts by mass or more and 1.0 parts by mass or less, and it is further preferable that the content of the water-soluble xylan is set to be in a ratio of 0.05 parts by mass or more and 0.5 parts by mass or less. In the method for producing a CNT-containing cellulose fiber according to the present invention, if the content of the water-soluble xylan per 100 parts by mass of the cellulose fiber raw material is set to be within the above-mentioned range, a stable dispersion state without aggregation can be obtained even in a spinning neat liquid, and thus an effect by incorporating the water-soluble xylan can be sufficiently obtained.

### <Spinning step>

In the spinning step, the spinning neat liquid obtained in the above-mentioned spinning neat liquid preparation step is coagulated by a wet coagulation process and spun to prepare a CNT-containing cellulose fiber.

### [Coagulation of spinning neat liquid by wet coagulation process]

The wet coagulation process is a spinning method in which a fiber raw material dissolved in a solvent is discharged into a coagulation bath (a bath filled with a liquid that does not dissolve the fiber raw material, such as water) and coagulated. Furthermore, in the wet coagulation process, the fiber raw material is organized when coagulated. Specifically, in the wet coagulation process, the fiber raw material is organized and coagulated in a partially crystallized state.

Therefore, in the method for producing a CNT-containing cellulose fiber according to the present invention, the spinning neat liquid is coagulated in a coagulation bath, and a coagulated product containing a chemically modified CNT is generated. Specifically, in the method for producing a CNT-containing cellulose fiber according to the present invention, for example, when a spinning neat liquid is discharged from a die having a plurality of discharge ports and coagulated in a coagulation bath, a fiber bundle (coagulated product) containing a chemically modified CNT can be obtained.

Incidentally, the liquid for coagulating the spinning neat liquid is not specifically limited, and examples may include water, mixed liquids of the above-mentioned ionic liquids with water, mixed liquids of the above-mentioned aprotic polar solvents with water, etc. Furthermore, as the coagulation conditions, the conditions used in the conventional wet coagulation methods can be used. The speed for discharging the spinning neat liquid into the coagulation bath may be appropriately determined according to the fineness and winding-up speed of the fiber to be produced.

The spinning neat liquid is preferably coagulated in the coagulation bath after optionally passing through an air layer (air gap). By passing through the air layer, the spinning neat liquid can be coagulated in a state where the molecular structures of the chemically modified CNT and the cellulose fiber in the spinning neat liquid are well arranged in the discharge direction (fiber axis direction).

### [Spinning]

The coagulated product obtained by coagulating the spinning neat liquid is optionally washed with water and dried, and then wound (i.e., spun) at a winding speed of 20 m/min or more and 2,000 m/min or less, preferably 50 m/min or more and 1, 500 m/min or less, more preferably 100 m/min or more and 1, 000 m/min or less, using a roller that rotates at a high speed, etc. to give a CNT-containing cellulose fiber. When winding the coagulated product to give the CNT-containing cellulose fiber, coagulation and desolvation further progress, and stretching is carried out at the same time, whereby the chemically modified CNT is oriented in the fiber axis direction.

Here, if the winding speed is set to be 2, 000 m/min or less, yarn breakage and variation in physical properties can be suppressed. Further, if the winding speed is set to be 20 m/min or more, fibrillation and decrease in strength can be suppressed.

### Examples

Hereinafter, the present invention is explained concretely based on Examples. However, the present invention is not limited to these Examples.

### (Example 1)

### <Preparation of chemically modified CNT>

A carbon nanotube ("ZEONANO SG101" manufactured by Zeon Nano Technology Co., Ltd.) was treated for 0.5 hour by using a vacuum plasma apparatus in which gas can be introduced ("YHS-DOS" manufactured by SAKIGAKE-Semiconductor Co., Ltd.), at a pressure of 40 Pa, a power of 200 W (energy output per unit surface area: 1.28 W/cm²) and a revolution velocity of 30 rpm under a nitrogen introduction condition, to give a chemically modified CNT.

The obtained chemically modified CNT was sprinkled on a carbon tape attached to a sample holder and fixed thereon, and a survey scan measurement (qualification analysis) was carried out on a visual state surface by using, for example, a scanning X-ray electron spectrometer "VG Theta Probe (manufactured by Thermo Fischer Scientific)" under measurement conditions of "irradiation X-ray; single crystalline spectroscopy AlKα, X-ray spot diameter; an oval shape of 800 µm × 400 µm)", and a narrow scan measurement (state analysis) was then carried out. As a result, it was confirmed that a nitrogen-carbon bond was present on the surface of the obtained chemically modified CNT (an area from the outermost surface to a depth up to 5 nm), and the total content of the nitrogen atom (N) and the oxygen atom (O) on the surface of the chemically modified CNT was 9.9 atom% .

### <Preparation of spinning neat liquid>

Next, 0.1 parts by mass of the obtained chemically modified CNT, 100 parts by mass of water, 1 part by mass of sodium dodecyl sulfate as a surfactant, and 0.1 parts by mass of a water-soluble xylan (glucuronoxylan) were mixed, and subjected to an ultrasonic dispersion treatment by ultrasonic irradiation to give a chemically modified CNT dispersion.

Furthermore, 90 parts by mass of 1-butyl-3-methylimidazolium chloride (BMIMCl) as an ionic liquid, 0.01 parts by mass of the obtained chemically modified CNT dispersion in terms of the CNT amount, and 9.99 parts by mass of pulp (trade name "VFC" manufactured by GeorgiaPacific, DP630) as a cellulose fiber raw material were put into a kneader and stirred so that BMIMCl homogeneously extended to the pulp. Thereafter they were heated to 110°C, and stirred while removing the water content by evaporation under a reduced pressure to dissolve the cellulose, whereby a chemically modified CNT composite cellulose solution (spinning neat liquid) was obtained.

### <Production and evaluation of CNT-containing cellulose fiber>

The obtained spinning neat liquid was ejected from a 1Hole nozzle having a diameter (inner diameter) of 270 µm, passed through an air layer of 150 mm and then soaked in 15°C water, and coagulation and desolvation were carried out, and reeled in at a winding speed of 126 m/min to give a CNT-containing cellulose fiber.

Furthermore, the fineness was measured for the obtained CNT-containing cellulose fiber by using an automatic fineness meter (trade name "Vibroskop400", manufactured by LENZING TECHNIK). The result is shown in Table 1. Furthermore, the strength, knot strength, elongation degree and knot elongation degree were measured by carrying out tests on the obtained CNT-containing cellulose fiber by using an automatic strength elongation degree meter (trade name "Vibrodyn500" manufactured by LENZING TECHNIK) (measurement conditions: a temperature of 20°C ± 2°C, a relative humidity of 65 ± 2%). The results are shown in Table 1.

### (Comparative Example 1)

A spinning neat liquid and a cellulose fiber were produced in similar manners to those of Example 1, except that a CNT without chemical modification ("ZEONANO SG101" manufactured by Zeon Nano Technology Co., Ltd.) was used instead of using a chemically modified CNT, and the fineness, strength, knot strength, elongation degree and knot elongation degree were measured for the obtained CNT-containing cellulose fiber. The result are shown in Table 1.

### (Comparative Example 2)

A spinning neat liquid and a cellulose fiber were produced in similar manners to those of Example 1, except that a chemically modified CNT was not incorporated, and the fineness, strength, knot strength, elongation degree and knot elongation degree were measured for the obtained CNT-containing cellulose fiber. The results are show in Table 1.

**[Table 1]**

| | Example 1 | Comparative Example 1 | Comparative Example 2 |
|---|---|---|---|
| CNT | With chemical modification | Without chemical modification | Unused |
| Fineness (dtex) | 1.01 | 1.05 | 1.03 |
| Strength (cN/dtex) | 5.87 | 5.24 | 4.85 |
| Elongation degree (%) | 6.5 | 5.7 | 5.4 |
| Knot strength (cN/dtex) | 4.12 | 2.87 | 2.47 |
| Knot elongation degree (%) | 3.6 | 3.3 | 2.7 |

From Table 1, improvement in the strength was confirmed in the cellulose fiber in which the chemically modified CNT was incorporated (combined with the chemically modified CNT) (Example 1) as compared to the cellulose fiber containing no CNT (Comparative Example 2). Furthermore, improvement in the knot strength and elongation degree was confirmed in the cellulose fiber of Example 1 as compared to the cellulose fiber of Comparative Example 2. Therefore, it can be said from these facts that the cellulose fiber of Example 1 can decrease fibrillation more than the cellulose fiber of Comparative Example 2 does.

Furthermore, in the cellulose fiber containing a chemically modified CNT (combined with the chemically modified CNT) (Example 1), the strength and knot strength were improved more than those of the cellulose fiber containing the unmodified CNT (combined with an unmodified CNT) (Comparative Example 1) . The reason is considered that the dispersion of the CNT in the cellulose solution is in a better state in the chemically modified CNT than that in the unmodified CNT. Furthermore, improvement in the knot strength and elongation degree was confirmed in the cellulose fiber of Example 1 as compared to the cellulose fiber of Comparative Example 1, and thus it can be said from this fact that the cellulose fiber of Example 1 can decrease fibrillation more than the cellulose fiber of Comparative Example 1 does.

As shown above, it was found that it becomes possible to produce a cellulose fiber having decreased fibrillation and excellent strength by combining a chemically modified CNT with a cellulose fiber.

### Industrial Applicability

According to the present invention, it is presumed that fibrillation is sufficiently decreased by improving knot strength and elongation degree, and thus a CNT-containing cellulose fiber that can sufficiently decrease peeling of cellulose microfibril, i.e., fibrillation, and that has sufficiently improved strength, can be provided.

## Claims

1. A carbon nanotube-containing cellulose fiber comprising a chemically modified carbon nanotube, and a cellulose fiber,
wherein the chemically modified carbon nanotube has, on the surface thereof, at least either of a nitrogen-carbon bond and an oxygen-carbon bond.

2. The carbon nanotube-containing cellulose fiber according to claim 1, wherein the chemically modified carbon nanotube contains, on the surface thereof, a nitrogen atom (N) and an oxygen atom (O) at a total content of 2 atom% or more.

3. The carbon nanotube-containing cellulose fiber according to claim 1 or 2, wherein the chemically modified carbon nanotube has, on the surface thereof, a functional group comprising at least one kind selected from the group consisting of a nitrogen atom, a carbon atom, a hydrogen atom and an oxygen atom.

4. A method for producing the carbon nanotube-containing cellulose fiber according to any one of claims 1 to 3, comprising:
a carbon nanotube dispersion preparation step by preparing a carbon nanotube dispersion obtainable by a dispersion treatment of a mixed liquid containing the chemically modified carbon nanotube, water and a water-soluble xylan;
a spinning neat liquid preparation step by preparing a spinning neat liquid by mixing the prepared carbon nanotube dispersion, a cellulose fiber raw material, and at least one of an aprotic polar solvent and an ionic liquid which are capable of dissolving said cellulose fiber raw material; and
a spinning step by coagulating the prepared spinning neat liquid by a wet coagulation process, followed by spinning.
